# EUROPEAN PATENT SPECIFICATION

(11) **EP 2 793 528 B1**
(45) Date of publication and mention of the grant of the patent: **26.04.2017**
(21) Application number: 12858287.1
(22) Date of filing: 13.12.2012
(51) Int. Cl.: H04W 76/02, H04M 1/2745, H04W 4/00, H04M 1/725, H04W 84/12

(54) **METHOD FOR TRANSMITTING DATA BETWEEN TERMINALS AND TERMINAL**
VERFAHREN ZUM ÜBERTRAGEN VON DATEN ZWISCHEN ENDGERÄTEN UND ENDGERÄT
PROCÉDÉ DE TRANSMISSION DE DONNÉES ENTRE DES TERMINAUX, ET TERMINAL

(30) Priority: 13.12.2011 CN 201110415231
(43) Date of publication of application: 22.10.2014
(73) Proprietor: Huawei Device Co., Ltd., Shenzhen, Guangdong 518129 (CN)
(72) Inventor: WEI, Qiuyang, Shenzhen Guangdong 518129 (CN); ZHAO, Xin, Shenzhen Guangdong 518129 (CN); CHEN, Guoqiao, Shenzhen Guangdong 518129 (CN)
(74) Representative: Thun, Clemens
(86) International application number: PCT/CN2012/086525
(87) International publication number: WO 2013/086993

(56) References cited:
- CN-A- 101 438 617
- CN-A- 101 461 221
- CN-A- 102 497 221
- US-A1- 2005 164 748
- US-A1- 2007 265 033
- US-A1- 2011 124 287

## Description

### TECHNICAL FIELD

Embodiments of the present invention relate to the field of electronic communications, and in particular, to a method for transmitting data between terminals and a terminal.

### BACKGROUND

At present, among methods for transmitting data between terminals such as a mobile phone and a computer, short-distance transmission methods including Bluetooth and WiFi are widely applied. For example, a Bluetooth data transmission process generally includes: 1. Both a sender and a recipient have Bluetooth enabled. 2. Set Bluetooth that the sender and the recipient are discoverable by each other. 3. Both the sender and the recipient have a Bluetooth search function enabled and discover each other. 4. Select Bluetooth pairing and enter a password to complete a pairing process. 5. The sender sends a file to transmit via Bluetooth. 6. The recipient clicks to receive the file and completes a file transfer. Besides, a Wifi Direct transmission process is similar to the Bluetooth transmission process.

It can be seen that in the prior art a wireless connection needs to be enabled manually for short-distance data transmission and a data transmission process is complex.

US 2007/0265033 A1 discloses a method for exchanging information using near field communications (NFC), where a request for information is transmitted from a mobile telephone through an NFC adapter associated with the mobile telephone. Information is then received in response to the request for information by the NFC adapter from an electronic device. The NFC tag of the electronic device is stored in the electronic phonebook of the mobile telephone, and the storage of the NFC tag may be automatically and/or manually. After the initial storing of the information in the electronic phone book, future communications between the mobile telephone and the electronic device and/or user utilize a user-friendly designation (e.g., contact information) to inform the mobile telephone user when devices are in range of communication.

### SUMMARY

Embodiments of the present invention provide a method for transmitting data between terminals and a terminal, so as to conveniently transmit data between terminals.

According to one aspect, an embodiment of the present invention provides a method for transmitting data between terminals, including:
selecting, by a sending terminal, data to transmit, and selecting at least one contact from a local address book as a receiving terminal, where the address book saves a radio frequency identifier of the receiving terminal corresponding to the at least one contact;
scanning, by a radio frequency identification module of the sending terminal, for the radio frequency identifier of the receiving terminal corresponding to the at least one contact according to the radio frequency identifier of the receiving terminal corresponding to the at least one contact; and
when the sending terminal finds, by scanning, the radio frequency identifier of the receiving terminal corresponding to the at least one contact, establishing, by the sending terminal, a WiFi Direct connection to the receiving terminal according to a transmission negotiation initiated by the radio frequency identification module, and transmitting the data through the WiFi Direct connection, where both the sending terminal and the receiving terminal have a WiFi Direct communication capability, wherein a server account of the at least one contact is pre-stored in the address book, the account has a correspondence with terminal identifier information of the receiving terminal, and the method further comprises:
   when the sending terminal fails to find, by scanning, the radio frequency identifier of the receiving terminal corresponding to the at least one contact, sending, by the sending terminal, a server a data forwarding request and the data to transmit, so that the server forwards, according to the terminal identifier information corresponding to the server account of the at least one contact, the receiving terminal the data to transmit.

According to another aspect, an embodiment of the present invention further provides a terminal, including:
a selecting module, configured to select data to transmit, and select at least one contact from a local address book as a receiving terminal, where the address book saves a radio frequency identifier of the receiving terminal corresponding to the at least one contact;
a radio frequency identification module, configured to scan for the radio frequency identifier of the receiving terminal corresponding to the at least one contact according to the radio frequency identifier of the receiving terminal corresponding to the at least one contact, and initiate a transmission negotiation when finding, by scanning, the radio frequency identifier of the receiving terminal corresponding to the at least one contact; and
a WiFi Direct module, configured to establish a WiFi Direct connection to the receiving terminal according to the transmission negotiation initiated by the radio frequency identification module, and transmit data through the WiFi Direct connection, where the receiving terminal has a WiFi Direct communication capability, wherein a server account of the at least one contact is pre-stored in the address book, the account has a correspondence with terminal identifier information of the receiving terminal, and the terminal further comprises:
   a sending module, configured to: when the scanning module fails to find, by scanning, the radio frequency identifier of the receiving terminal corresponding to the at least one contact, send a server a data forwarding request and the data to transmit, so that the server forwards, according to the terminal identifier information corresponding to the server account of the at least one contact, the receiving terminal the data to transmit.

As can be known from the foregoing technical solutions, in the method for transmitting data between terminals and the terminal provided by the embodiments of the present invention, a radio frequency identifier of a receiving terminal corresponding to at least one contact is saved in a local address book of a sending terminal; when sending selected data, the sending terminal selects the at least one contact from the local address book as a receiving terminal; then a radio frequency identification module of the sending terminal scans for a radio frequency identifier of the receiving terminal corresponding to the at least one contact to determine whether the receiving terminal of the at least one contact is within a radio frequency identifiable range; and when finding the radio frequency identifier of the receiving terminal corresponding to the at least one contact by scanning, the sending terminal establishes a WiFi Direct connection to the receiving terminal according to a transmission negotiation initiated by the radio frequency identification module, and transmits the data through the WiFi Direct connection. In this way, a user of the sending terminal only needs to select data to transmit and select at least one contact from a local address book as a receiving terminal; the sending terminal then automatically determines, by scanning, whether the receiving terminal is within a radio frequency identifiable range, and when finding, by scanning, a radio frequency identifier of the receiving terminal, a radio frequency identification module automatically establishes a WiFi Direct connection to complete data transmission. Therefore, a user can transmit data conveniently without manually searching for a receiving terminal or enabling WiFi Direct to establish a WiFi Direct connection.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a flowchart of a method for transmitting data between terminals according to an embodiment of the present invention; and
FIG. 2 is a schematic structural diagram of a terminal according to an embodiment of the present invention.

### DESCRIPTION OF EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

### Method Embodiment

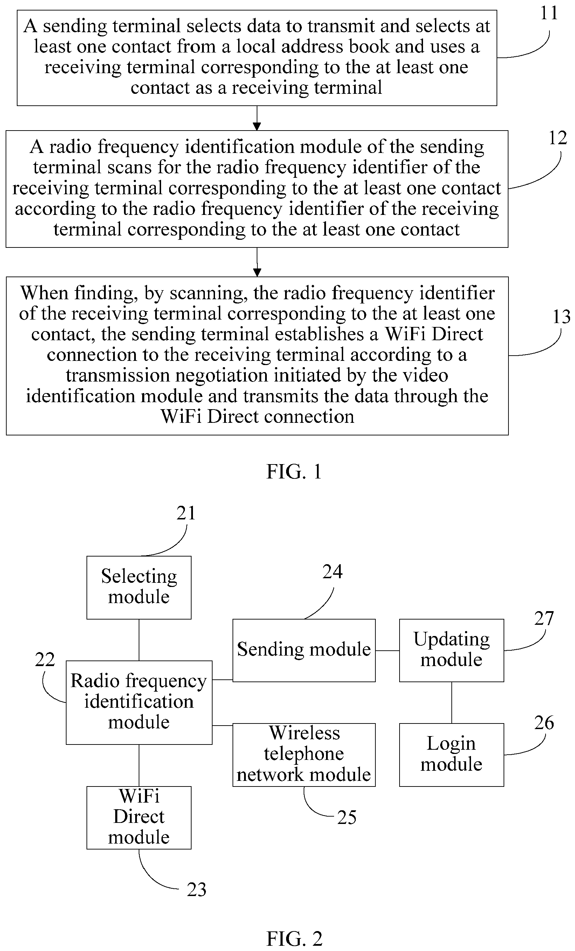

As shown in FIG. 1, an embodiment of the present invention provides a method for transmitting data between terminals. The terminals include a fixed terminal and a mobile terminal, where the fixed terminal includes a computer and the like, and the mobile terminal includes a mobile phone, a tablet computer, a laptop, and the like. A terminal used for sending data refers to a sending terminal, and a terminal used for receiving data refers to a receiving terminal.

Referring to FIG. 1, the method includes the following steps:
Step 11: A sending terminal selects data to transmit and selects a contact from a local address book as a receiving terminal;
where the address book saves at least a radio frequency identifier of the receiving terminal corresponding to the contact.

The data to transmit may be, for example, a single file, or may also be a plurality of files. When receiving the data, the receiving terminal may selectively receive the data. For example, when the transmitted data is a single file, the receiving terminal may receive the file or refuse to receive the file; when the transmitted data is a plurality of files, the receiving terminal may select a file to receive according to a need.

The local address book of the sending terminal saves communication information of a plurality of contacts, including names, numbers, email addresses, avatars, and the like. When selecting a contact from the local address book as a receiving terminal, the sending terminal may select any piece of information from the communication information such as a name, a number, an email address, and an avatar as long as the piece of information can match the receiving terminal.

The address book saves at least a radio frequency identifier of the receiving terminal corresponding to the contact. An RFID (Radio Frequency Identification, radio frequency identification) can identify a specific target including a reader, an electronic tag, and an application software system by using a radio signal, and a working principle and a working process of the RFID belong to the prior art, which are not repeated herein. The embodiment of the present invention uses an RFID to determine whether two terminals are within an identifiable range of each other (for details, refer to the following description). In order to determine whether the two terminals are within an identifiable range of each other, the radio frequency identifier of the receiving terminal corresponding to the contact should be saved in the address book of the sending terminal. In this way, a binding relationship based on the communication information (for example, a name) and the radio frequency identifier exists between the receiving terminal and the contact in the local address book of the sending terminal. Therefore, when the sending terminal selects the contact, for example, the name, from the local address book, a terminal that has the radio frequency identifier corresponding to the name becomes a receiving terminal for receiving data.

Step 12: A radio frequency identification module of the sending terminal scans for the radio frequency identifier of the receiving terminal corresponding to the contact according to the radio frequency identifier of the receiving terminal corresponding to the contact.

Because the radio frequency identifier of the receiving terminal corresponding to the contact is saved in the address book of the sending terminal, the sending terminal can use the radio frequency identification module (RFID module) to scan for the contact, that is, the radio frequency identifier of the receiving terminal corresponding to the contact, to determine whether the receiving terminal is within an identifiable range, of which a specific process belongs to the prior art and is not repeated herein. For example, a reader of the sending terminal sends a radio wave of a specific frequency to an electronic flag (which is also known as a transponder) of the receiving terminal to drive the electronic flag of the receiving terminal to send internal data information; and the reader of the sending terminal then performs sequential interpretation. This process can be used for determining whether the receiving terminal is within an identifiable range.

Step 13: When finding, by scanning, the radio frequency identifier of the receiving terminal corresponding to the contact, the sending terminal establishes a WiFi Direct connection to the receiving terminal according to a transmission negotiation initiated by the radio frequency identification module and transmits data through the WiFi Direct connection, where both the sending terminal and the receiving terminal have a WiFi Direct communication capability.

Generally, the identifiable range of the RFID varies depending on factors such as a frequency and a chip. For example, for a passive tag, an identifiable range varies from about 10 cm to about 10 m with different frequencies; for an active tag, an identifiable range can reach 100 m according to different frequencies; but a distance of transmission over WiFi Direct (WiFi Direct) is generally above 100 m.

Therefore, if the sending terminal finds, by scanning, the radio frequency identifier of the receiving terminal corresponding to the contact, it means that the distance between the sending terminal and the receiving terminal is generally shorter than 100 m and totally falls within the distance of transmission over WiFi Direct, so that the sending terminal can establish a WiFi Direct connection to the receiving terminal and transmit data through the WiFi Direct connection.

Further, the establishing, by the sending terminal, a WiFi Direct connection to the receiving terminal according to the transmission negotiation initiated by the radio frequency identification module, and the transmitting the data through the WiFi Direct connection may include: sending, by the radio frequency identification module of the sending terminal, a WiFi Direct connection request to the receiving terminal, where the WiFi Direct connection request includes hardware identifier information, for example, an identification name, of the sending terminal; receiving, by the sending terminal, confirmation information sent by the receiving terminal, where the confirmation information includes hardware identifier information, for example, an identification name, of the receiving terminal; enabling, by the sending terminal, WiFi Direct according to the hardware identifier of the receiving terminal in the confirmation information, and establishing the WiFi Direct connection to the receiving terminal on which WiFi Direct is enabled; and sending, by the sending terminal, the receiving terminal the data to transmit. In case that a password is needed, the sending terminal randomly generates a password and sends the random password to the receiving terminal along with the request; and after receiving the random password, the receiving terminal returns the random password along with the confirmation information, and thereby pairing is automatically completed, a connection is established, and the data is sent.

Besides, a terminal usually has both Bluetooth and WiFi Direct communication capabilities. When a distance between the sending terminal and a mobile terminal is relatively short, for example, within 10 m, the sending terminal may also use Bluetooth or WiFi Direct to establish a connection and use Bluetooth or WiFi Direct to transmit data. Specifically, establishing a connection and transmitting data by using Bluetooth are similar to those by using the foregoing WiFi Direct, and are not repeated herein. However, when the distance between the sending terminal and the mobile terminal is relatively long, Bluetooth communication may possible fail and moreover certain power consumption occurs during an attempt at a Bluetooth search between the terminals.

Further, the local address book of the sending terminal also saves a server account of the contact, which has a correspondence with terminal identifier information of the receiving terminal. The method further includes: when the sending terminal fails to find, by scanning, the radio frequency identifier of the receiving terminal corresponding to the contact, sending, by the sending terminal, to a server a data forwarding request and the data to transmit, so that the server forwards, according to the terminal identifier information corresponding to the server account of the contact, the receiving terminal the data to transmit.

When the distance between the sending terminal and the receiving terminal is relatively so long that the sending terminal fails to find, by scanning, the radio frequency identifier of the receiving terminal corresponding to the contact, data transmission between the terminals may be performed by using a server. The server may be a server which is agreed on by the two terminals and interacts with the two terminals over a same protocol, and is preferably a cloud server. Because the address book of the sending terminal saves the server account of the contact and the account has a correspondence with terminal identifier information, a binding relationship based on the server account and the terminal identifier information exists between the receiving terminal and the contact in the local address book of the sending terminal. Therefore, when the sending terminal selects the contact, for example, the name, from the local address book, a terminal that has the terminal identifier information corresponding to the name becomes a receiving terminal for receiving data. The terminal identifier information is a unique piece of information for identifying a terminal ID. Using a mobile phone as an example, the terminal identifier information may be an IMEI (International Mobile Equipment Identity, international mobile equipment identity). The following describes a working process of forwarding data by using a server: when failing to find, by scanning, the radio frequency identifier of the receiving terminal corresponding to the contact, the sending terminal sends the server a data forwarding request and the data to transmit, where the data forwarding request carries a server account of the contact; after receiving the data forwarding request and the data to transmit which are sent by the sending terminal, the server saves the data to transmit and then finds terminal identifier information corresponding to the server account of the contact, so as to send the data to the receiving terminal having the terminal identifier information. The server may send a data sending notification to the receiving terminal, and after the receiving terminal confirms the data sending notification, the server can send the data.

Further, when failing to find, by scanning, the radio frequency identifier of the receiving terminal corresponding to the contact, the sending terminal sends, through a wireless telephone network, to the receiving terminal the data to transmit.

When the distance between the sending terminal and the receiving terminal is relatively so long that the sending terminal fails to find the radio frequency identifier of the receiving terminal corresponding to the contact, data transmission between the terminals may be performed through a wireless telephone network. The wireless telephone network may be a 2G (2nd Generation), 3G (3rd Generation) or 4G (4th Generation)network, such as CDMA (Code Division Multiple Access) and LTE (Long Term Evolution). A specific connection and transmission process belongs to the prior art, which is not repeated herein.

Further, before the sending terminal scans for the radio frequency identifier of the receiving terminal corresponding to the contact, the sending terminal has already logged in to the cloud server by using a cloud account; when logging in to the cloud server, the sending terminal updates the radio frequency identifier information of the receiving terminal corresponding to the contact in the address book, which is sent by the cloud server, where when logging in to the cloud server by using the cloud account, the receiving terminal reports and sends its radio frequency identifier to the cloud server, and after updating the radio frequency identifier information, the cloud server sends the updated radio frequency identifier information to the sending terminal, so that the sending terminal updates the radio frequency identifier information of the receiving terminal corresponding to the contact in the address book.

Radio frequency identifier information changes with terminals. Generally, both a user of the sending terminal and a user of the receiving terminal use their own terminals to send and receive data. Therefore, the radio frequency identifier of the receiving terminal corresponding to the contact corresponding to the receiving terminal does not change in the local address book of the sending terminal, and the sending terminal can successfully transmit data to the receiving terminal by using the binding relationship between the contact and the radio frequency identifier of the receiving terminal. However, if the user of the receiving terminal cannot use the terminal for some reason, for example, the receiving terminal of the user is out of power but the user of the receiving terminal still intends to receive the data, the user of the receiving terminal can use a synchronization function of a cloud service to receive the data on another terminal.

The cloud server can store a correspondence between a cloud account of a user and a radio frequency identifier of a terminal used by the user to log in to the cloud server. When a user logs in to a cloud server by using a cloud account and enables a cloud service, a terminal used by the user to log in to the server sends a radio frequency identifier of the current terminal to the cloud server; after receiving the sent radio frequency identifier, the cloud server automatically updates a correspondence between the cloud account used for login and the radio frequency identifier of the terminal which has logged in to the cloud server; and when another terminal which stores the user as a contact in its local address book logs in to the cloud server, the another terminal automatically receives the updated correspondence sent by the cloud server, so that the another terminal updates a radio frequency identifier of the receiving terminal corresponding to the contact as the user in the local address book of the another terminal. The foregoing describes a principle followed when a user uses the cloud server to update the radio frequency identifier of the user in a local address book of another terminal. Similarly, when logging in to a cloud server and starting a cloud service, each user uses the cloud server to update a radio frequency identifier of the user in a local address book of another terminal. After describing the foregoing synchronization function of the cloud service, the following describes a working process in which the sending terminal uses the synchronization function of the cloud service to transmit data: when logging in to the cloud server by using the cloud account and enabling the cloud service, the receiving terminal sends its radio frequency identifier to the cloud server; after receiving the radio frequency identifier, the server updates a correspondence between the cloud account and the radio frequency identifier; after logging in to the cloud server and enabling the cloud service, the sending terminal automatically updates radio frequency identifiers of the receiving terminals corresponding to all contacts saved in its local address book that have already logged in to the cloud server, especially the radio frequency identifier of the receiving terminal corresponding to the contact that is to receive the data; and then the sending terminal can scan for the updated radio frequency identifier of the contact that is to receive the data, thereby establishing the WiFi Direct connection and transmitting the data. In this way, because the radio frequency identifier of the receiving terminal corresponding to the contact that is to receive the data in the address book of the sending terminal is consistent with the current receiving terminal, the user of the receiving terminal can still receive the data even using another terminal,.

Similarly, a server account of the contact of the receiving terminal is also saved in the address book of the sending terminal, and the account has a correspondence with terminal identifier information of the receiving terminal. When the server is preferably a cloud server, the terminal identifier information may also be automatically updated by using the synchronization function of the cloud service. In this way, the user of the receiving terminal can still receive the data even using another terminal to log in to the cloud server.

Further, when the sending terminal and the receiving terminal establish a WiFi Direct connection and transmit data through the WiFi Direct connection, if the distance between the sending terminal and the receiving terminal is longer than an effective transmission distance of WiFi Direct, the sending terminal may use the following three manners to continue to transmit the data:
Manner 1: The sending terminal sends, through the wireless telephone network, data left untransmitted to the receiving terminal.

Manner 2: The sending terminal sends data left untransmitted to the server, so that the server sends the data left untransmitted to the receiving terminal, where a server account of the at least one contact is also saved in the address book, and the account has a correspondence with terminal identifier information of the receiving terminal.

Manner 3: The sending terminal suspends sending of the data, and when finding again, by scanning, the radio frequency identifier of the receiving terminal corresponding to the at least one contact, the sending terminal continues to send, through the WiFi Direct connection, the data left untransmitted to the receiving terminal.

A person skilled in the art may easily understand the foregoing three manners after understanding related content of "when failing to find, by scanning, the radio frequency identifier of the receiving terminal corresponding to the contact, the sending terminal sends, through a wireless telephone network, to the receiving terminal the data to transmit", "when failing to find, by scanning, the radio frequency identifier of the receiving terminal corresponding to the contact, the sending terminal sends a server a data forwarding request and the data to transmit, so that the server forwards, according to the terminal identifier information corresponding to the server account of the contact, the receiving terminal the data to transmit", and "when finding, by scanning, the radio frequency identifier of the receiving terminal corresponding to the at least one contact, the sending terminal establishes a WiFi Direct connection to the receiving terminal and transmits the data through the WiFi Direct connection" in the foregoing description, which is not repeated herein.

A person skilled in the art may understand that the embodiment of the present invention describes only an example in which one terminal transmits data to another terminal, and it is also implementable that one terminal transmits data to a plurality of terminals, of which a working principle is similar to the foregoing, but with a difference lying in that the sending terminal selects a plurality of contacts from a local address book as receiving terminals and therefore multithread transmission is enabled; and similarly, a working principle and a working process of data transmission between a plurality of terminals are also similar to the foregoing and are not repeated herein.

In the embodiment of the present invention, a sending terminal selects data to transmit and selects at least one contact from a local address book as a receiving terminal; the sending terminal scans for a radio frequency identifier of the receiving terminal corresponding to the at least one contact according to the radio frequency identifier of the receiving terminal corresponding to the at least one contact; and when finding, by scanning, the radio frequency identifier of the receiving terminal corresponding to the at least one contact, the sending terminal establishes a WiFi Direct connection to the receiving terminal and transmits the data through the WiFi Direct connection. In this way, the sending terminal finds, by scanning, using a radio frequency identification technology that the receiving terminal is within an identifiable range, and then automatically establishes the WiFi Direct connection to transmit data. Therefore, a user of the sending terminal only needs to select data to transmit and select at least one contact from an address book as the receiving terminal, and then the terminals can automatically complete data transmission. The user can establish the WiFi Direct connection, without manually searching for the receiving terminal or enabling WiFi Direct, to transmit data conveniently. Further, when failing to find, by scanning, the radio frequency identifier of the receiving terminal corresponding to the at least one contact, the sending terminal sends a server a data forwarding request and the data to transmit, so that the server forwards, according to the terminal identifier information corresponding to the server account of the at least one contact, the receiving terminal the data to transmit. In this way, on the basis of securing an advantage of convenient data transmission, an advantage that data can be transmitted even if a distance between terminals is relatively long is also achieved. Further, by using a synchronization function of a cloud service, the user can use any terminal to log in to a cloud server and receive the data. Further, when the sending terminal and the receiving terminal establish a WiFi Direct connection and transmit the data through the WiFi Direct connection, if the distance between the sending terminal and the receiving terminal is longer than an effective transmission distance of WiFi Direct, the terminals can use three manners (referring to the foregoing description) to continue to transmit the data, which thereby ensures transmission continuity.

### Device Embodiment

As shown in FIG. 2, an embodiment of the present invention provides a terminal, including the following modules:
a selecting module 21, configured to select data to transmit, and select at least one contact from a local address book as a receiving terminal, where a radio frequency identifier of the receiving terminal corresponding to the at least one contact is saved in the address book;
a radio frequency identification module 22, configured to scan for the radio frequency identifier of the receiving terminal corresponding to the at least one contact according to the radio frequency identifier of the receiving terminal corresponding to the at least one contact, and initiate a transmission negotiation when finding, by scanning, the radio frequency identifier of the receiving terminal corresponding to the at least one contact; and
a WiFi Direct module 23, configured to establish a WiFi Direct connection to the receiving terminal according to the transmission negotiation initiated by the radio frequency identification module and transmit the data through the WiFi Direct connection, where the receiving terminal has a WiFi Direct capability.

Further, the address book also saves a server account of the at least one contact, the account has a correspondence with terminal identifier information of the receiving terminal, and the terminal further includes:
a sending module 24, configured to: when the radio frequency identification module fails to find, by scanning, the radio frequency identifier of the receiving terminal corresponding to the at least one contact, send a server a data forwarding request and the data to transmit, so that the server forwards, according to the terminal identifier information corresponding to the server account of the at least one contact, the receiving terminal the data to transmit.

Further, the terminal further includes: a wireless telephone network module 25, configured to: when the radio frequency identification module fails to find, by scanning, the radio frequency identifier of the receiving terminal corresponding to the at least one contact, send the receiving terminal the data to transmit.

Further, the server is a cloud server, and the terminal further includes:
a login module 26, configured to: before the radio frequency identification module scans for the radio frequency identifier of the receiving terminal corresponding to the at least one contact, log in to the cloud server by using a cloud account; and
an updating module 27, configured to update radio frequency identifier information of the receiving terminal corresponding to the at least one contact in the address book, where the radio frequency identifier information is sent by the cloud server,
where when logging in to the cloud server by using the cloud account, the receiving terminal reports and sends the radio frequency identifier of the receiving terminal to the cloud server, and after the server updates the radio frequency identifier information, the cloud server sends the updated radio frequency identifier information to the updating module, so that the updating module updates the radio frequency identifier information of the receiving terminal corresponding to the at least one contact in the address book.

Further, the login module 26 is further configured to: before the sending module sends the server the data forwarding request and the data to transmit, enables the terminal to log in to the cloud server by using the cloud account; and
the updating module 27 is further configured to update the terminal identifier information of the at least one contact in the address book, where the terminal identifier information is sent by the cloud server, where
when logging in to the cloud server by using the cloud account, the receiving terminal reports and sends a terminal identifier of the receiving terminal to the cloud server, and after updating the terminal identifier information, the server sends the updated terminal identifier information to the updating module, so that the updating module updates the terminal identifier information of the receiving terminal corresponding to the at least one contact in the address book.

Further, when the WiFi Direct module 23 and the receiving terminal establish a WiFi Direct connection and transmit the data through the WiFi Direct connection, if a distance between the terminal and the receiving terminal is longer than an effective transmission distance of WiFi Direct,
the wireless telephone network module 25 is further configured to send the receiving terminal;
the sending module 24 is further configured to send the data left untransmitted to the server, so that the server sends the data left untransmitted to the receiving terminal; and
the WiFi Direct module 23 is further configured to: suspend sending of the data, and when the radio frequency identification module finds again, by scanning, the radio frequency identifier of the receiving terminal corresponding to the at least one contact, continue to send the data left untransmitted to the receiving terminal.

Further, the terminal includes a mobile phone, and the mobile phone further includes a radio frequency circuit, a microphone, a loudspeaker, and a power source; where
the radio frequency circuit is configured to establish communication between the mobile phone and a wireless network to implement data reception and transmission between the mobile phone and the wireless network;
the microphone is configured to collect voice and convert the collected voice into voice data, so that the mobile phone transmits the voice data to the wireless network by using the radio frequency circuit;
the loudspeaker is configured to convert the voice data, which the mobile phone receives from the wireless network by using the radio frequency circuit, back into the voice and play the voice to a user; and
the power source is configured to supply power to circuits or components of the mobile phone.

In the embodiment of the present invention, a working process and a working principle related to the terminal are similar to those described in the foregoing method embodiment, and are not repeated herein.

In the embodiment of the present invention, a selecting module 21 selects data to transmit and selects at least one contact from a local address book as a receiving terminal; a radio frequency identification module 22 scans for a radio frequency identifier of the receiving terminal corresponding to the at least one contact according to the radio frequency identifier of the receiving terminal corresponding to the at least one contact; and when a radio frequency identification module finds, by scanning, the radio frequency identifier of the receiving terminal corresponding to the at least one contact, a WiFi Direct module 23 establishes a WiFi Direct connection to the receiving terminal according to a transmission negotiation initiated by the radio frequency identification module 22, and transmits the data through the WiFi Direct connection. In this way, the sending terminal finds, by scanning, using a radio frequency identification technology that the receiving terminal is within an identifiable range, and then automatically establishes a WiFi Direct connection to transmit data. Therefore, a user of the sending terminal only needs to select data to transmit and select at least one contact from an address book as a receiving terminal, and then the terminal can automatically complete data transmission. The user can establish the WiFi Direct connection, without manually searching for the receiving terminal or enabling WiFi Direct, to transmit data conveniently. Further, when the radio frequency identification module 22 fails to find, by scanning, the radio frequency identifier of the receiving terminal corresponding to the at least one contact, a sending module 24 sends a server a data forwarding request and the data to transmit, so that the server forwards, according to the terminal identifier information corresponding to the server account of the at least one contact, the receiving terminal the data to transmit. In this way, on the basis of securing an advantage of convenient data transmission, an advantage that data can be transmitted even if a distance between terminals is relatively long is also achieved. Further, a login module 26 and an updating module 27 use a synchronization function of a cloud service, so that the user can use any terminal to log in to a cloud server and receive the data. Further, when the sending terminal and the receiving terminal establish a WiFi Direct connection and transmit the data through the WiFi Direct connection, if the distance between the sending terminal and the receiving terminal is longer than an effective transmission distance of WiFi Direct, the terminals can use a wireless telephone network module 25, the sending module 24, and the WiFi Direct module 23 to continue to transmit the data, which thereby ensures transmission continuity.

A person of ordinary skill in the art may understand that all or a part of the processes of the methods in the embodiments may be implemented by a computer program instructing relevant hardware. The foregoing program may be stored in a computer readable storage medium. When the program runs, the processes of the methods in the embodiments are performed. The foregoing storage medium may be a magnetic disk, an optical disc, a read-only memory (Read-Only Memory, ROM), a random access memory (Random Access Memory, RAM), or the like.

In conclusion, the foregoing embodiments are only preferred embodiments of the present invention, and are not intended to limit the present invention.

## Claims

1. A method for transmitting data between terminals, comprising:
In response to an operation by a user, selecting (11), by a sending terminal, data to transmit, and selecting at least one contact from a local address book and determining a terminal corresponding to the at least one contact as a receiving terminal, wherein a radio frequency identifier of the receiving terminal corresponding to the at least one contact is pre-stored in the address book; scanning (12), by a radio frequency identification module of the sending terminal, for the radio frequency identifier of the receiving terminal corresponding to the at least one contact; and
when the sending terminal finds, by scanning, the radio frequency identifier of the receiving terminal corresponding to the at least one contact, establishing (13), by the sending terminal, a WiFi Direct connection to the receiving terminal according to a transmission negotiation initiated by the radio frequency identification module, and transmitting the data through the WiFi Direct connection, wherein both the sending terminal and the receiving terminal have a WiFi Direct communication capability, wherein a server account of the at least one contact is pre-stored in the address book, the account has a correspondence with terminal identifier information of the receiving terminal, and the method further comprises:
when the sending terminal fails to find, by scanning, the radio frequency identifier of the receiving terminal corresponding to the at least one contact, sending, by the sending terminal, a server a data forwarding request and the data to transmit, so that the server forwards, according to the terminal identifier information corresponding to the server account of the at least one contact, the receiving terminal the data to transmit.

2. The method according to claim 1, wherein the establishing, by the sending terminal, a WiFi Direct connection to the receiving terminal according to a transmission negotiation initiated by the radio frequency identification module, and transmitting the data through the WiFi Direct connection comprises:
sending, by the radio frequency identification module of the sending terminal, a WiFi Direct connection request to the receiving terminal, wherein the WiFi Direct connection request comprises hardware identifier information of the sending terminal;
receiving, by the sending terminal, confirmation information sent by the receiving terminal, wherein the confirmation information comprises hardware identifier information of the receiving terminal; and
enabling, by the sending terminal according to the hardware identifier information of the receiving terminal in the confirmation information, WiFi Direct, and establishing the WiFi Direct connection to the receiving terminal on which WiFi Direct is enabled; and
sending, by the sending terminal, to the receiving terminal the data to transmit.

3. The method according to claim 1 or 2, wherein the server is a cloud server, and before the sending terminal scans for the radio frequency identifier of the receiving terminal corresponding to the at least one contact, the sending terminal has already logged in to the cloud server by using the cloud account; and when logging in to the cloud server, the sending terminal updates radio frequency identifier information of the receiving terminal corresponding to the at least one contact in the address book, wherein the radio frequency identifier information is sent by the cloud server.

4. The method according to claim 1 or 2, wherein the server is a cloud server, and before the sending terminal sends the server the data forwarding request and the data to transmit, the sending terminal has already logged in to the cloud server by using the cloud account; and when logging in to the cloud server, the sending terminal updates the terminal identifier information of the receiving terminal corresponding to the at least one contact in the address book, wherein the terminal identifier information is sent by the cloud server.

5. The method according to claim 1, wherein when the sending terminal and the receiving terminal establish the WiFi Direct connection and transmit the data through the WiFi Direct connection, if a distance between the sending terminal and the receiving terminal is longer than an effective transmission distance of WiFi Direct, the method further comprises:
sending, by the sending terminal through a wireless telephone network, data left untransmitted to the receiving terminal;
or sending, by the sending terminal, the data left untransmitted to the server, so that the server sends the data left untransmitted to the receiving terminal;
or suspending, by the sending terminal, sending of the data, and when the sending terminal finds again, by scanning, the radio frequency identifier of the receiving terminal corresponding to the at least one contact, continuing, by the sending terminal through the WiFi Direct connection established again, to send the data left untransmitted to the receiving terminal.

6. The method according to any one of claims 1 to 5, wherein the data transmitted by the sending terminal can be selectively received by the receiving terminal.

7. A terminal, wherein the terminal is a sending terminal during data transmission, and comprises:
a selecting module (21), configured to, in response to an operation by a user, select data to transmit, and select at least one contact from a local address book and determinea terminal corresponding to the at least one contact as a receiving terminal, wherein a radio frequency identifier of the receiving terminal corresponding to the at least one contact is pre-stored in the address book;
a radio frequency identification module (22), configured to scan for the radio frequency identifier of the receiving terminal corresponding to the at least one contact, and initiate a transmission negotiation when finding, by scanning, the radio frequency identifier of the receiving terminal corresponding to the at least one contact; and
a WiFi Direct module (23), configured to establish a WiFi Direct connection to the receiving terminal according to the transmission negotiation initiated by the radio frequency identification module, and transmit the data through the WiFi Direct connection, wherein the receiving terminal has a WiFi Direct communication capability, wherein a server account of the at least one contact is pre-stored in the address book, the account has a correspondence with terminal identifier information of the receiving terminal, and the terminal further comprises:
a sending module (24), configured to: when the scanning module fails to find, by scanning, the radio frequency identifier of the receiving terminal corresponding to the at least one contact, send a server a data forwarding request and the data to transmit, so that the server forwards, according to the terminal identifier information corresponding to the server account of the at least one contact, the receiving terminal the data to transmit.

8. The terminal according to claim 7, wherein the server is a cloud server, and the terminal further comprises:
a login module (26), configured to: before the scanning module scans for the radio frequency identifier of the receiving terminal corresponding to the at least one contact, enable the terminal to log in to the cloud server by using the cloud account; and
an updating module (27), configured to update radio frequency identifier information of the receiving terminal corresponding to the at least one contact in the address book, wherein the radio frequency identifier information is sent by the cloud server.

9. The terminal according to claim 8, wherein the login module is further configured to: before the sending module sends the server the data forwarding request and the data to transmit, enable the terminal to log in to the cloud server by using the cloud account; and
the updating module is further configured to update the terminal identifier information of the receiving terminal corresponding to the at least one contact in the address book, wherein the terminal identifier information is sent by the cloud server.

10. The terminal according to claim 7, wherein when the WiFi Direct module and the receiving terminal establish the WiFi Direct connection and transmit the data through the WiFi Direct connection, if a distance between the terminal and the receiving terminal is longer than an effective transmission distance of WiFi Direct,
the wireless telephone network module is further configured to send data left untransmitted to the receiving terminal;
the sending module is further configured to send the data left untransmitted to the server, so that the server sends the data left untransmitted to the receiving terminal; and
the WiFi Direct module is further configured to: suspend sending of the data, and when the scanning module finds again, by scanning, the radio frequency identifier of the receiving terminal corresponding to the at least one contact, continue to send the data left untransmitted to the receiving terminal.

11. The terminal according to any one of claims 7 to 10, wherein the terminal comprises a mobile phone, and the mobile phone further comprises a radio frequency circuit, a microphone, a loudspeaker, and a power source, wherein
the radio frequency circuit is configured to establish communication between the mobile phone and a wireless network to implement data reception and transmission between the mobile phone and the wireless network;
the microphone is configured to collect voice and convert the collected voice into voice data, so that the mobile phone transmits the voice data to the wireless network by using the radio frequency circuit;
the loudspeaker is configured to convert the voice data, which the mobile phone receives from the wireless network by using the radio frequency circuit, back into the voice and play the voice to a user; and
the power source is configured to supply power to circuits or components of the mobile phone.

## Patentansprüche

1. Verfahren zur Übertragung von Daten zwischen Endgeräten, umfassend:
in Reaktion auf eine Betätigung durch einen Benutzer, Auswählen (11), durch ein sendendes Endgerät, der zu übertragenden Daten und Auswählen von mindestens einem Kontakt aus einem lokalen Adressbuch und Bestimmen eines Endgeräts, das dem mindestens einen Kontakt als empfangendes Endgerät entspricht, wobei eine Hochfrequenzkennung des empfangenden Endgeräts, das dem mindestens einen Kontakt entspricht, im Adressbuch vorgespeichert wird;
Abtasten (12), durch ein Hochfrequenzidentifizierungsmodul des sendenden Endgeräts, nach der Hochfrequenzkennung des empfangenden Endgeräts, das dem mindestens einen Kontakt entspricht; und
wenn das sendende Endgerät, durch Abtasten, die Hochfrequenzkennung des dem mindestens einen Kontakt entsprechenden empfangenden Endgeräts ermittelt, Herstellen (13), durch das sendende Endgerät, einer "Wi-Fi Direct"-Verbindung mit dem empfangenden Endgerät gemäß einer durch das Hochfrequenzidentifizierungsmodul eingeleiteten Übertragungsverhandlung und Übertragen der Daten durch die "Wi-Fi Direct"-Verbindung, wobei sowohl das sendende Endgerät als auch das empfangende Endgerät eine "Wi-Fi Direct"-Kommunikationsfähigkeit aufweisen, wobei ein Serverkonto des mindestens einen Kontakts in dem Adressbuch vorgespeichert ist, das Konto eine Übereinstimmung mit der Endgerätekennungsinformation des empfangenden Endgeräts aufweist und das Verfahren ferner umfasst:
wenn das sendende Endgerät, durch Abtasten, die Hochfrequenzkennung des dem mindestens einen Kontakt entsprechenden empfangenden Endgeräts nicht ermitteln kann, Senden, durch das sendende Endgerät, einer Datenweiterleitungsanforderung und der zu übertragenden Daten an einen Server, sodass der Server gemäß der dem Serverkonto des mindestens einen Kontakts entsprechenden Endgerätekennungsinformation die zu übertragenden Daten an das empfangende Endgerät weiterleitet.

2. Verfahren nach Anspruch 1, wobei das Herstellen, durch das sendende Endgerät, einer "Wi-Fi Direct"-Verbindung mit dem empfangenden Endgerät gemäß einer durch das Hochfrequenzidentifizierungsmodul eingeleiteten Übertragungsverhandlung und das Übertragen von Daten durch die "Wi-Fi Direct"-Verbindung umfasst:
Senden, durch das Hochfrequenzidentifizierungsmodul des sendenden Endgeräts, einer "Wi-Fi Direct"-Verbindungsanforderung an das empfangende Endgerät, wobei die "Wi-Fi Direct"-Verbindungsanforderung eine Hardwarekennungsinformation des sendenden Endgeräts umfasst; Empfangen, durch das sendende Endgerät, einer Bestätigungsinformation, die von dem empfangenden Endgerät gesendet wird, wobei die Bestätigungsinformation die Hardwarekennungsinformation des empfangenden Endgeräts umfasst; und
Aktivieren, durch das sendende Endgerät gemäß der Hardwarekennungsinformation des empfangenden Endgerätes in der Bestätigungsinformation, von "Wi-Fi Direct" und Herstellen der "Wi-Fi Direct"-Verbindung mit dem empfangenden Endgerät, an dem "Wi-Fi Direct" aktiviert ist; und
Senden, durch das sendende Endgerät, der zu übertragenden Daten an das empfangende Endgerät.

3. Verfahren nach Anspruch 1 oder 2, wobei der Server ein Cloud-Server ist, und das sendende Endgerät sich vor dem Abtasten nach der Hochfrequenzkennung des dem mindestens einen Kontakt entsprechenden empfangenden Endgeräts durch das sendende Endgerät bereits an dem Cloud-Server unter Verwendung des Cloud-Kontos angemeldet hat; und das sendende Endgerät beim Anmelden beim Cloud-Server die Hochfrequenzkennungsinformation des dem mindestens einen Kontakt in dem Adressbuch entsprechenden empfangenden Endgeräts aktualisiert, wobei die Hochfrequenzkennungsinformation durch den Cloud-Server gesendet wird.

4. Verfahren nach Anspruch 1 oder 2, wobei der Server ein Cloud-Server ist und, bevor das sendende Endgerät dem Server die Datenweiterleitungsanforderung und die zu übertragenden Daten sendet, sich das sendende Endgerät bereits unter Verwendung des Cloud-Kontos an dem Cloud-Server angemeldet hat; und das sendende Endgerät beim Anmelden an dem Cloud-Server die Endgerätekennungsinformation des dem mindestens einen Kontakt in dem Adressbuch entsprechenden empfangenden Endgeräts aktualisiert, wobei die Endgerätekennungsinformation durch den Cloud-Server gesendet wird.

5. Verfahren nach Anspruch 1, wobei, wenn das sendende Endgerät und das empfangende Endgerät die "Wi-Fi Direct"-Verbindung herstellen und die Daten über die "Wi-Fi Direct"-Verbindung übertragen, wenn eine Entfernung zwischen dem sendenden Endgerät und dem empfangenden Endgerät länger als eine wirksame Übertragungsdistanz für "Wi-Fi Direct" ist, das Verfahren ferner umfasst:
Senden, durch das sendende Endgerät über ein drahtloses Telefonnetz, der nicht an das empfangende Endgerät übertragenen Daten;
oder Senden, durch das sendende Endgerät, der nicht übertragenen Daten an den Server, sodass der Server die nicht übertragenen Daten an das empfangende Endgerät sendet;
oder Unterbrechen, durch das sendende Endgerät, des Sendens der Daten, und wenn das sendende Endgerät, durch Abtasten, die Hochfrequenzkennung des dem mindestens einen Kontakt entsprechenden empfangenden Endgeräts erneut ermittelt, Fortsetzen, durch das sendende Endgerät über die erneut hergestellte "Wi-Fi Direct"-Verbindung, des Sendens der nicht übertragenen Daten an das empfangende Endgerät.

6. Verfahren nach einem der Ansprüche 1 bis 5, wobei die von dem sendenden Endgerät übertragenen Daten selektiv von dem empfangenden Endgerät empfangen werden können.

7. Endgerät, wobei das Endgerät während der Datenübertragung ein sendendes Endgerät ist, und umfasst:
ein Auswahlmodul (21), das konfiguriert ist, um in Reaktion auf eine Betätigung durch einen Benutzer, die zu übertragenden Daten auszuwählen und mindestens einen Kontakt aus einem lokalen Adressbuch auszuwählen und ein Endgerät zu bestimmen, das dem mindestens einen Kontakt als empfangendes Endgerät entspricht, wobei eine Hochfrequenzkennung des empfangenden Endgeräts, das dem mindestens einen Kontakt entspricht, im Adressbuch vorgespeichert wird;
ein Hochfrequenzidentifizierungsmodul (22), das konfiguriert ist, um die Hochfrequenzkennung des dem mindestens einen Kontakt entsprechenden empfangenden Endgeräts abzutasten und eine Übertragungsverhandlung einzuleiten, wenn, durch Abtasten, die Hochfrequenzkennung des dem mindestens einen Kontakt entsprechenden empfangenden Endgeräts ermittelt wird, und
ein "Wi-Fi Direct"-Modul (23), das konfiguriert ist, um eine "Wi-Fi Direct"-Verbindung mit dem empfangenden Endgerät gemäß der durch das Hochfrequenzidentifizierungsmodul eingeleiteten Übertragungsverhandlung herzustellen und die Daten über die "Wi-Fi Direct"-Verbindung zu übertragen, wobei das empfangende Endgerät eine "Wi-Fi Direct"-Kommunikationsfähigkeit aufweist, wobei ein Serverkonto des mindestens einen Kontakts in dem Adressbuch vorgespeichert ist, das Konto eine Übereinstimmung mit der Endgerätekennungsinformation des empfangenden Endgeräts aufweist und das Verfahren ferner umfasst:
ein Sendemodul (24), das konfiguriert ist, um: wenn das Abtastmodul, durch Abtasten, die Hochfrequenzkennung des dem mindestens einen Kontakt entsprechenden empfangenden Endgeräts nicht ermitteln kann, eine Datenweiterleitungsanforderung und die zu übertragenden Daten an einen Server zu senden, sodass der Server gemäß der dem Serverkonto des mindestens einen Kontakts entsprechenden Endgerätekennungsinformation die zu übertragenden Daten an das empfangende Endgerät weiterleitet.

8. Endgerät nach Anspruch 7, wobei der Server ein Cloud-Server ist und das Endgerät ferner umfasst:
ein Anmeldemodul (26), das konfiguriert ist, um: bevor das Abtastmodul nach der Hochfrequenzkennung des dem mindestens einen Kontakt entsprechenden empfangenden Endgeräts abtastet,
das Endgerät zu aktivieren, um sich mit dem Cloud-Konto bei dem Cloud-Server anzumelden; und
ein Aktualisierungsmodul (27), das konfiguriert ist, um die Hochfrequenzkennungsinformation des dem mindestens einen Kontakt im Adressbuch entsprechenden empfangenden Endgeräts zu aktualisieren, wobei die Hochfrequenzkennungsinformation durch den Cloud-Server gesendet wird.

9. Endgerät nach Anspruch 8, wobei das Anmeldemodul ferner konfiguriert ist, um:
bevor das Sendemodul dem Server die Datenweiterleitungsanforderung und die zu übertragenden Daten sendet, das Endgerät zu aktivieren, um sich mit dem Cloud-Konto bei dem Cloud-Server anzumelden; und
das Aktualisierungsmodul ferner konfiguriert ist, um die Endgerätekennungsinformation des dem mindestens einen Kontakt im Adressbuch entsprechenden empfangenden Endgeräts zu aktualisieren, wobei die Endgerätekennungsinformation durch den Cloud-Server gesendet wird.

10. Endgerät nach Anspruch 7, wobei, wenn das "Wi-Fi Direct"-Modul und das empfangende Endgerät die "Wi-Fi Direct"-Verbindung herstellen und die Daten über die "Wi-Fi Direct"-Verbindung übertragen, wenn eine Entfernung zwischen dem Endgerät und dem empfangenden Endgerät länger als eine wirksame Übertragungsdistanz für "Wi-Fi Direct" ist,
das Modul für das drahtlose Telefonnetz ferner konfiguriert ist, die nicht übertragenen Daten an das empfangende Endgerät zu senden;
das Sendemodul ferner konfiguriert ist, um die nicht übertragenen Daten an den Server zu senden, sodass der Server die nicht übertragenen Daten an das empfangende Endgerät sendet; und
das "Wi-Fi Direct"-Modul ferner konfiguriert ist, um: das Senden der Daten zu unterbrechen, und wenn das Abtastmodul, durch Abtasten, die Hochfrequenzkennung des dem mindestens einen Kontakt entsprechenden empfangenden Endgeräts erneut ermittelt, das Senden der nicht übertragenen Daten an das empfangende Endgerät fortzusetzen.

11. Endgerät nach einem der Ansprüche 7 bis 10, bei dem das Endgerät ein Mobiltelefon umfasst und das Mobiltelefon ferner einen Hochfrequenzschaltkreis, ein Mikrofon, einen Lautsprecher und eine Stromquelle umfasst, wobei
der Hochfrequenzschaltkreis konfiguriert ist, um eine Kommunikation zwischen dem Mobiltelefon und einem drahtlosen Netzwerk herzustellen, um den Datenempfang und die Übertragung zwischen dem Mobiltelefon und dem drahtlosen Netzwerk zu implementieren;
das Mikrofon konfiguriert ist, um Sprache zu erfassen und die erfasste Sprache in Sprachdaten umzuwandeln, sodass das Mobiltelefon die Sprachdaten unter Verwendung des Hochfrequenzschaltkreises an das drahtlose Netzwerk überträgt; der Lautsprecher konfiguriert ist, um die Sprachdaten, die das Mobiltelefon von dem drahtlosen Netzwerk empfängt, unter Verwendung des Hochfrequenzschaltkreises zurück in die Sprache umzuwandeln und die Sprache einem Benutzer wiederzugeben; und
die Stromquelle konfiguriert ist, um die Schaltkreise oder Komponenten des Mobiltelefons mit Strom zu versorgen.

## Revendications

1. Procédé d'émission de données entre terminaux, comprenant les étapes consistant à :
en réponse à une opération effectuée par un utilisateur, sélectionner (11), par un terminal émetteur, des données à émettre, et sélectionner au moins un contact dans un carnet d'adresses local et déterminer un terminal correspondant à l'au moins un contact comme terminal récepteur, un identifiant de radiofréquence du terminal récepteur correspondant à l'au moins un contact étant préalablement stocké dans le carnet d'adresses ;
rechercher par balayage (12), par un module d'identification de radiofréquence du terminal émetteur, l'identifiant de radiofréquence du terminal récepteur correspondant à l'au moins un contact ; et
lorsque le terminal émetteur trouve, par balayage, l'identifiant de radiofréquence du terminal récepteur correspondant à l'au moins un contact, établir (13), par le terminal émetteur, une connexion Wi-fi Direct avec le terminal récepteur selon une négociation d'émission lancée par le module d'identification de radiofréquence, et émettre les données par la connexion Wi-fi Direct, le terminal émetteur et le terminal récepteur ayant tous deux une capacité de communication Wi-fi Direct, un compte de serveur de l'au moins un contact étant préalablement stocké dans le carnet d'adresses, le compte ayant une correspondance avec des informations d'identifiant de terminal du terminal récepteur, et le procédé comprenant également l'étape consistant à :
lorsque le terminal émetteur ne parvient pas à trouver, par balayage, l'identifiant de radiofréquence du terminal récepteur correspondant à l'au moins un contact, envoyer à un serveur, par le terminal émetteur, une demande d'envoi de données et les données à émettre, afin que le serveur envoie au terminal récepteur, d'après les informations d'identifiant de terminal correspondant au compte de serveur de l'au moins un contact, les données à émettre.

2. Procédé selon la revendication 1, dans lequel les actions d'établir, par le terminal émetteur, une connexion Wi-fi Direct avec le terminal récepteur selon une négociation d'émission lancée par le module d'identification de radiofréquence, et d'émettre les données par la connexion Wi-fi Direct, comprennent les étapes consistant à :
envoyer, par le module d'identification de radiofréquence du terminal émetteur, une demande de connexion Wi-fi Direct au terminal récepteur, la demande de connexion Wi-fi Direct contenant des informations d'identifiant de matériel du terminal émetteur ;
recevoir, par le terminal émetteur, des informations de confirmation envoyées par le terminal récepteur, les informations de confirmation contenant des informations d'identifiant de matériel du terminal récepteur ; et
activer, par le terminal émetteur, d'après les informations d'identifiant de matériel du terminal récepteur figurant dans les informations de confirmation, Wi-fi Direct, et établir la connexion Wi-fi Direct avec le terminal récepteur sur lequel Wi-fi Direct est activé ; et
envoyer au terminal récepteur, par le terminal émetteur, les données à émettre.

3. Procédé selon la revendication 1 ou 2, dans lequel le serveur est un serveur en nuage, et avant que le terminal émetteur ne recherche par balayage l'identifiant de radiofréquence du terminal récepteur correspondant à l'au moins un contact, le terminal émetteur s'est déjà connecté au serveur en nuage au moyen du compte du nuage ; et lors de la connexion au serveur en nuage, le terminal émetteur met à jour des informations d'identifiant de radiofréquence du terminal récepteur correspondant à l'au moins un contact du carnet d'adresses, les informations d'identifiant de radiofréquence étant envoyées par le serveur en nuage.

4. Procédé selon la revendication 1 ou 2, dans lequel le serveur est un serveur en nuage, et avant que le terminal émetteur n'envoie au serveur la demande d'envoi de données et les données à émettre, le terminal émetteur s'est déjà connecté au serveur en nuage au moyen du compte du nuage ; et lors de la connexion au serveur en nuage, le terminal émetteur met à jour les informations d'identifiant de terminal du terminal récepteur correspondant à l'au moins un contact du carnet d'adresses, les informations d'identifiant de terminal étant envoyées par le serveur en nuage.

5. Procédé selon la revendication 1, le procédé, lorsque le terminal émetteur et le terminal récepteur établissent la connexion Wi-fi Direct et envoient les données par la connexion Wi-fi Direct, si une distance entre le terminal émetteur et le terminal récepteur est supérieure à une distance de transmission effective de Wi-fi Direct, comprenant également les étapes consistant à :
envoyer, par le terminal émetteur, au moyen d'un réseau téléphonique sans fil, les données non encore émises au terminal récepteur ;
ou envoyer, par le terminal émetteur, les données non encore émises au serveur, afin que le serveur envoie les données non encore émises au terminal récepteur ;
ou suspendre, par le terminal émetteur, l'envoi des données, et lorsque le terminal émetteur trouve à nouveau, par balayage, l'identifiant de radiofréquence du terminal récepteur correspondant à l'au moins un contact, continuer d'envoyer, par le terminal émetteur, au moyen de la connexion Wi-fi Direct qui a été rétablie, les données non encore émises au terminal récepteur.

6. Procédé selon l'une des revendications 1 à 5, dans lequel les données émises par le terminal émetteur peuvent être reçues sélectivement par le terminal récepteur.

7. Terminal, le terminal étant un terminal émetteur durant une émission de données, et comprenant :
un module de sélection (21), conçu pour, en réponse à une opération effectuée par un utilisateur, sélectionner des données à émettre, et sélectionner au moins un contact dans un carnet d'adresses local et déterminer un terminal correspondant à l'au moins un contact comme terminal récepteur, un identifiant de radiofréquence du terminal récepteur correspondant à l'au moins un contact étant préalablement stocké dans le carnet d'adresses ;
un module d'identification de radiofréquence (22) conçu pour rechercher par balayage l'identifiant de radiofréquence du terminal récepteur correspondant à l'au moins un contact, et lancer une négociation d'émission en cas de découverte, par balayage, de l'identifiant de radiofréquence du terminal récepteur correspondant à l'au moins un contact ; et
un module Wi-fi Direct (23), conçu pour établir une connexion Wi-fi Direct avec le terminal récepteur selon la négociation d'émission lancée par le module d'identification de radiofréquence, et émettre les données par la connexion Wi-fi Direct, le terminal récepteur ayant une capacité de communication Wi-fi Direct, un compte de serveur de l'au moins un contact étant préalablement stocké dans le carnet d'adresses, le compte ayant une correspondance avec les informations d'identifiant de terminal du terminal récepteur, et le terminal comprenant également :
un module émetteur (24), conçu pour : lorsque le module de balayage ne parvient pas à trouver, par balayage, l'identifiant de radiofréquence du terminal récepteur correspondant à l'au moins un contact, envoyer à un serveur une demande d'envoi de données et les données à émettre, afin que le serveur envoie au terminal récepteur, d'après les informations d'identifiant de terminal correspondant au compte de serveur de l'au moins un contact, les données à émettre.

8. Terminal selon la revendication 7, le serveur étant un serveur en nuage, et le terminal comprenant également :
un module de connexion (26), conçu pour : avant que le module de balayage ne recherche par balayage l'identifiant de radiofréquence du terminal récepteur correspondant à l'au moins un contact, permettre au terminal de se connecter au serveur en nuage au moyen du compte du nuage ; et
un module de mise à jour (27), conçu pour mettre à jour les informations d'identifiant de radiofréquence du terminal récepteur correspondant à l'au moins un contact du carnet d'adresses, les informations d'identifiant de radiofréquence étant envoyées par le serveur en nuage.

9. Terminal selon la revendication 8, dans lequel le module de connexion est également conçu pour : avant que le module émetteur n'envoie au serveur la demande d'envoi de données et les données à émettre, permettre au terminal de se connecter au serveur en nuage au moyen du compte du nuage ; et
le module de mise à jour est également conçu pour mettre à jour les informations d'identifiant de terminal du terminal récepteur correspondant à l'au moins un contact du carnet d'adresses, les informations d'identifiant de terminal étant envoyées par le serveur en nuage.

10. Terminal selon la revendication 7, dans lequel, lorsque le module Wi-fi Direct et le terminal récepteur établissent la connexion Wi-fi Direct et émettent les données par la connexion Wi-fi Direct, si une distance entre le terminal et le terminal récepteur est supérieure à une distance de transmission effective de Wi-fi Direct,
le module de réseau téléphonique sans fil est également conçu pour envoyer les données non encore émises au terminal récepteur ;
le module émetteur est également conçu pour envoyer les données non encore émises au serveur, afin que le serveur envoie les données non encore émises au terminal récepteur ; et
le module Wi-fi Direct est également conçu pour : suspendre l'envoi des données, et lorsque le module de balayage trouve à nouveau, par balayage, l'identifiant de radiofréquence du terminal récepteur correspondant à l'au moins un contact, continuer d'envoyer les données non encore émises au terminal récepteur.

11. Terminal selon l'une quelconque des revendications 7 à 10, le terminal comprenant un téléphone mobile, et le téléphone mobile comprenant également un circuit de radiofréquence, un microphone, un haut-parleur et une source d'alimentation, dans lequel
le circuit de radiofréquence est conçu pour établir la communication entre le téléphone mobile et un réseau sans fil pour mettre en oeuvre la réception et l'émission de données entre le téléphone mobile et le réseau sans fil ;
le microphone est conçu pour recueillir la voix et convertir la voix recueillie en données vocales, afin que le téléphone mobile envoie les données vocales au réseau sans fil au moyen du circuit de radiofréquence ;
le haut-parleur est conçu pour reconvertir en voix les données vocales que le téléphone mobile reçoit du réseau sans fil au moyen du circuit de radiofréquence, et reproduire la voix pour un utilisateur ; et
la source d'alimentation est conçue pour assurer l'alimentation électrique de circuits ou de composants du téléphone mobile.
